# EUROPEAN PATENT APPLICATION

(11) **EP 4 810 534 A1**
(43) Date of publication of application: **23.09.2026**
(21) Application number: 24891656.1
(22) Date of filing: 15.10.2024
(51) Int. Cl.: C08G 18/66, C08G 18/44, C08G 18/32, C08G 18/38, C08G 18/75, C08G 18/73, C09D 175/04, C09D 133/00, C09D 5/02, C08L 33/00

(54) **WATER-SOLUBLE POLYURETHANE DISPERSION COMPOSITION AND BASE COAT COMPOSITION COMPRISING POLYURETHANE DISPERSION PREPARED THEREFROM**

(30) Priority: 13.11.2023 KR 20230156498
(71) Applicant: KCC Corporation, Seoul 06608 (KR)
(72) Inventor: JEONG, Daeun, Yongin-si, Gyeonggi-do 16993 (KR); CHO, Suyoung, Yongin-si, Gyeonggi-do 16988 (KR); KIM, Hyoungjin, Seoul 06346 (KR); LEE, Eunhee, Yongin-si, Gyeonggi-do 16891 (KR)
(74) Representative: Pfenning, Meinig & Partner mbB
(86) International application number: PCT/KR2024/015586
(87) International publication number: WO 2025/105709

(57) **Abstract**

The present invention relates to a water-soluble polyurethane dispersion composition comprising a polycarbonate polyol, an alkylene phosphoric acid polyol, and an isocyanate compound, wherein the alkylene phosphoric acid polyol comprises an acid group and a hydroxyl group; and a base coat composition comprising a polyurethane dispersion prepared from the composition.

## Description

### [TECHNICAL FIELD]

This application claims the benefit of priority based on Korean Patent Application No. 10-2023-0156498 filed on November 13, 2023, and all contents disclosed in the relevant Korean Patent Application are included as part of the present specification.

The present disclosure relates to a base coat composition including a water-soluble polyurethane dispersion composition and a polyurethane dispersion prepared from the same, to form a coating film which is excellent in various physical properties such as an appearance characteristic, adhesion, and water resistance.

### [BACKGROUND ART]

A vehicle refinishing process is to recover various damage portions from a local vehicle damaged portion to three-panel damaged portions, to an original state. In detail, the vehicle refinishing process to recover the damaged portions is mainly classified into the steps for adjusting a surface, coating an intermediate portion, and coating a top portion. In detail, the step for coating the top portion generally includes the steps for masking a portion not requiring the coating of the top portion, for coating a base paint containing a pigment for matching color, for coating a transparent clear paint for imparting gloss and increasing durability, and for performing a polishing process and an evaluating process to clearly finish an appearance surface of a painting.

Meanwhile, paints for refinishing a vehicle have been actively converted into water-soluble paints all over the world based on the US and Europe. To convert the paints for refinishing the vehicle into the water-soluble paints, generally, a resin applied to paints has been converted into water-soluble resin. To convert the resin into the water-soluble resin, there is a manner for preparing a resin by forcibly dissolving an organic resin derived from a petroleum-based material in water using an emulsifier, a manner for preparing a resin by including a monomer containing a hydrophilic functional group during synthesis of an organic resin and then additionally adding water such as ionized water, or a manner for preparing a resin by additionally applying an emulsifier together with a monomer containing a hydrophilic functional group during synthesis of the organic resin. When the emulsifier is used alone or when a monomer containing the hydrophilic functional group is used alone as described above, the emulsion or the hydrophilic functional group is more required, as the molecular weight of the resin is increased. However, when the emulsion or the hydrophilic functional group is included in excess, the hydrophilicity of the prepared resin may be excessively increased, thereby causing physical properties, such as water resistance and corrosion resistance, of the coating film, to be deteriorated.

Meanwhile, as a consumer requires acid resistance and scratch resistance in a higher level, the development of the base paints having higher functionality and eco-friendly properties has been accelerated. In particular, there is a need to develop a water-soluble base paint which is used for vehicle refinishing excellent in physical properties, such as an appearance characteristic, adhesion, or water resistance, of a coating film, which are similar to physical properties of an existing solvent-based paint, and is eco-friendly due to the water-soluble properties.

For example, Korean Patent Registration No. 10-1044781 (Patent document 1) discloses a water-soluble base coat paint composition including i) 60 to 80 parts by weight of a mixing binder including an emulsion resin, a polyurethane dispersion resin, a pH adjuster for the mixing binder, and a first solvent; and ii) 20 to 40 parts by weight of a color paste composition including a polyester resin, a paint, a pH adjuster for the paste composition, and a second solvent. However, the base coat paint composition in Patent document 1 is insufficient in drying properties and adhesion.

Accordingly, there is a need for the studies and the development of a base coat composition which exhibits excellent properties in an appearance characteristic, adhesion, and water resistance of the formed coating film, and exhibits an eco-friendly characteristic due to a water-soluble property.

### [DISCLOSURE OF THE INVENTION]

### [TECHNICAL PROBLEM]

Accordingly, the present disclosure provides a base coat composition which forms a coating film having an excellent appearance characteristic, excellent adhesion, and excellent water resistance, and exhibits an eco-friendly property due to a water-soluble property.

### [TECHNICAL SOLUTION]

The present disclosure provides a water-soluble polyurethane dispersion composition including polycarbonate polyol, alkylene phosphate polyol, and isocyanate compound.

In addition, the present disclosure provides a base coat composition for refinishing a vehicle, which includes a water-soluble polyurethane dispersion prepared from a water-soluble polyurethane dispersion composition, acrylic resin and solvent.

### [ADVANTAGEOUS EFFECTS]

According to the present disclosure, the base coat composition including the polyurethane dispersion prepared from the water-soluble polyurethane dispersion composition may form a coating film having an excellent appearance characteristic, excellent adhesion, and excellent water resistance. In addition, the base coat composition exhibits an excellent eco-friendly property due to a water-soluble property. In addition, the base coat composition is dried at a moderate speed to exhibit excellent workability.

### [BEST MODE FOR CARRYING OUT THE INVENTION]

Hereinafter, the details of the present disclosure will be described.

As used herein, the wording "weight average molecular weight" is measured through a manner known in the art, and may be measured, for example, through a gel permeation chromatography (GPC) manner.

In addition, the wording "glass transition temperature" is measured through a manner known in the art, and may be measured, for example, through a differential scanning calorimetry (DSC) manner.

Furthermore, a functional group value, such as "acid value", "hydroxyl value", and "amine value" may be measured through a manner well known in the art, and may be measured, for example, through a titration manner.

In addition, the term "viscosity" is measured through a manner well known in the art, and may be measured, for example, at a room temperature (20°C or 25°C) using a Brookfield viscometer (rotational spindle viscometer).

The term "average diameter" is measured through a manner known in the art. For example, the term "average diameter" may be a diameter corresponding to 50% cumulative distribution (D₅₀) in a particle size distribution measured using a particle size analyzer (PSA).

### Water-soluble polyurethane dispersion composition

According to the present disclosure, a water-soluble polyurethane dispersion composition includes a polycarbonate polyol, an alkylene phosphate polyol, and an isocyanate compound.

In general, a resin having an ester structure may be formed by removing condensation water through a reaction between a carboxyl group and a hydroxyl group. Accordingly, an ester has a property of being hydrolyzed in the presence of water, to exhibit insufficient water resistance. However, the polycarbonate polyol exhibits water resistance in that hydrolysis does not occur even in the presence of water, as a carbonate ester is formed by eliminating hydrochloric acid through a reaction between a hydroxyl group-containing bisphenol-based resin and phosgene.

In addition, a metal material such as a vehicle has a polar property on a surface thereof. Accordingly, when a material having a polar group is coated, the adhesion may be improved. Accordingly, according to the present disclosure, as alkylene phosphate polyol containing a polar phosphate group and a polyol group for forming urethane is provided, the formed coating film exhibits excellent adhesion and polyurethane is easily prepared.

Specifically, according to the present disclosure, by using, as monomers for preparing polyurethane, a polycarbonate polyol and an alkylene phosphate polyol containing an acid group and a hydroxyl group, water resistance may be improved due to hydrolysis-resistant carbonate groups, and adhesion may be enhanced because phosphate groups form covalent bonds with polar materials.

### Polycarbonate polyol

A polycarbonate polyol forms polyurethane as a polyol in a resin reacts with an isocyanate compound.

The polycarbonate polyol may be a ring-opening polymer of an alicyclic alkylene carbonate and a polyhydroxy compound.

In this case, the alicyclic alkylene carbonate may be, for example, a C2-C6 alicyclic alkylene carbonate, or a C2-C4 alicyclic alkylene carbonate. Specifically, the alicyclic alkylene carbonate may be cycloethylene carbonate.

The polyhydroxy compound may be, for example, a C2-C8 alkylene diol, or a C4-C7 alkylene diol. Specifically, the polyhydroxy compound may include at least one selected from the group consisting of 1,4-butanediol, 1,5-pentanediol, and 1,6-hexanediol.

Specifically, the polycarbonate polyol may be poly(hexamethylene carbonate) diol.

The polycarbonate polyol may have a weight average molecular weight (Mw) in the range from 500 to 3,000 g/mol or from 1,000 to 2,000 g/mol. When the weight average molecular weight of the polycarbonate polyol is within the above range, the formed coating film may have excellent wettability and excellent adhesion with a substrate. In contrast, when the weight average molecular weight of the polycarbonate polyol is less than the above range, dispersibility in water of prepared polyurethane may be deteriorated due to an increase in viscosity of the polyol, or wettability with a substrate of the formed coating film may be reduced or hardness of the formed coating film may be increased due to an increase in glass transition temperature (Tg) of the prepared polyurethane, thereby causing insufficient adhesion. Meanwhile, when the weight average molecular weight of the polycarbonate polyol exceeds the above range, the glass transition temperature (Tg) of the prepared polyurethane may be excessively lowered, thereby causing the insufficient hardness of the formed coating film.

The polycarbonate polyol may have a hydroxyl value (OHv) ranging from 30 mgKOH/g to 200 mgKOH/g, from 50 mgKOH/g to 150 mgKOH/g, or from 55 mgKOH/g to 120 mgKOH/g. When the hydroxyl value of the polycarbonate polyol is less than the above range, the glass transition temperature (Tg) of the prepared polyurethane may be excessively increased, thereby reducing the wettability with the substrate of the prepared coating film or increasing the hardness of the prepared coating film to cause insufficient adhesion. When the hydroxyl value of the polycarbonate polyol exceeds the above range, the glass transition temperature (Tg) of the prepared polyurethane may be excessively lowered, thereby reducing the hardness of the prepared coating film.

### Alkylene phosphate polyol

The alkylene phosphate polyol reacts with an isocyanate compound to form polyurethane to improve the adhesion of a composition including the prepared polyurethane.

The alkylene phosphate polyol includes an acid group and a hydroxyl group. Specifically, the alkylene phosphate polyol may include a compound represented by Chemical Formula 1.

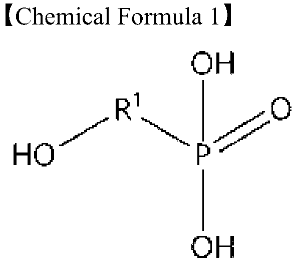

In Chemical Formula 1, R¹ is a group containing oxyalkylene or alkylene.

For example, R¹ may be a polyoxyethylene group.

Specifically, the alkylene phosphate polyol may include a compound represented by Chemical Formula 2.

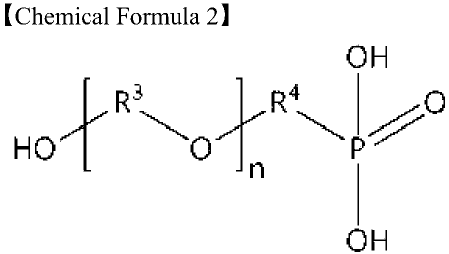

In Chemical Formula 2, each of R³ and R⁴ is independently an alkylene.

For example, each of R³ and R⁴ may be independently a C2-C5 alkylene, or a C2-C3 alkylene.

The alkylene refers to a divalent radical which is derived by removing one hydrogen atom from carbon atoms of an alkyl group and which is in a branched-chain, linear, or cyclic structure.

The alkylene phosphate polyol may have a weight average molecular weight (Mw) ranging from 300 g/mol to 800 g/mol, or from 500 g/mol to 650 g/mol. When the weight average molecular weight of the alkylene phosphate polyol is within the above range, reaction stability of the dispersion of the prepared polyurethane may be excellent and the hardness of a formed coating film may be excellent. In contrast, when the weight average molecular weight of the alkylene phosphate polyol is less than the above range, stability of the prepared polyurethane may be reduced due to delay of a urethane reaction caused by low molecular weight. When the weight average molecular weight exceeds the above range, the glass transition temperature (Tg) of the prepared polyurethane may be excessively lowered, thereby reducing the hardness of the prepared coating film.

Furthermore, the alkylene phosphate polyol may have a hydroxyl value (OHv) ranging from 50 mgKOH/g to 150 mgKOH/g, or ranging from 90 mgKOH/g to 120 mgKOH/g. When the hydroxyl value of the alkylene phosphate polyol is within the range, the alkylene phosphate polyol reacts with an isocyanate compound to introduce a phosphate group into a polyurethane structure, thereby improving adhesion of the formed coating film. In contrast, when the hydroxyl value of the alkylene phosphate polyol is less than the above range, an amount of the phosphate group introduced into the prepared polyurethane is insufficient, thereby causing adhesion of the formed coating film to be deteriorated or causing a problem in which hardness of the formed coating film is reduced due to an excessively lowered glass transition temperature (Tg) of the prepared polyurethane. When the hydroxyl value exceeds the above range, a large amount of phosphate group is introduced into the polyurethane structure, thereby causing water resistance to be reduced due to excessive hydrophilization of the polyurethane and causing a problem in which storage stability of the prepared polyurethane is reduced due to decreased reactivity during a urethane reaction.

The polycarbonate polyol and the alkylene phosphate polyol may be included in a composition at an equivalent ratio of 0.1:1 to 10:1, or 0.5:1 to 2.5:1. When a weight ratio between the polycarbonate polyol and the alkylene phosphate polyol is within the above range, the adhesion of a prepared coating film and the dispersion stability in water of the prepared polyurethane may be excellent. In contrast, when the weight ratio between the polycarbonate polyol and the alkylene phosphate polyol is less than the above range, that is, when a small amount of the polycarbonate polyol is contained with respect to the weight of the alkylene phosphate polyol, hydrophilicity of the prepared polyurethane is excessively increased, thereby reducing the water resistance of a prepared coating film. When the weight ratio exceeds the above range, that is, when an excessive amount of the polycarbonate polyol is contained with respect to the weight of the alkylene phosphate polyol, the dispersibility in water may be deteriorated due to a decrease in hydrophilicity of the prepared polyurethane.

### Isocyanate compound

The isocyanate compound reacts with the polycarbonate polyol and the alkylene phosphate polyol to form the polyurethane.

The isocyanate compound may include a first isocyanate compound having an alicyclic structure and a second isocyanate compound having a linear structure. The first alicyclic isocyanate compound improves the hardness of a prepared coating film and the dispersion stability in water of the prepared polyurethane due to the alicyclic structure. Meanwhile, the second linear isocyanate compound having the linear structure improves the adhesion of the prepared coating film. Accordingly, the dispersion composition includes the isocyanate compound having the alicyclic structure and the isocyanate compound having the linear structure together, such that the formed coating film exhibits the excellent hardness, and the prepared polyurethane exhibits the excellent stability in water, thereby improving the adhesion of the coating film.

The first isocyanate compound improves the hardness of the formed coating film and improves the water dispersion stability of the prepared polyurethane. Specifically, the first isocyanate compound, which includes at least two isocyanate groups (NCO groups) in one molecule, may have an alicyclic structure. More specifically, the first isocyanate compound may be a difunctional compound having the alicyclic structure. For example, the first isocyanate compound may comprise at least one selected from the group consisting of isophorone diisocyanate and 4,4'-dicyclohexylmethane diisocyanate.

The second isocyanate compound adjusts the reactivity of the polyurethane composition and adjusts the glass transition temperature (Tg) of the prepared polyurethane. Specifically, the second isocyanate compound, which includes at least two isocyanate groups (NCO groups) in one molecule, may have a linear structure. More specifically, the second isocyanate compound may be a difunctional compound having the linear structure. For example, the second isocyanate compound may include at least one selected from the group consisting of hexamethylene diisocyanate and trimethylhexamethylene diisocyanate.

The first isocyanate compound and the second isocyanate compound may be included in a composition at a weight ratio of 3:1 to 1:1, or 2:1 to 1:1. When the weight ratio of the first isocyanate compound to the second isocyanate compound is within the above range, dispersion stability in water of the prepared polyurethane and the adhesion of the prepared coating film may be improved. In contrast, when the weight ratio is less than the above range, that is, when a small amount of the first isocyanate compound is included with respect to a weight of the second isocyanate compound, the hardness of the prepared coating film may be reduced or the dispersion stability in water of the prepared polyurethane may be deteriorated. Meanwhile, when the weight ratio exceeds the above range, that is, when an excessive amount of the first isocyanate compound is included with respect to the weight of the second isocyanate compound, the hardness of the prepared coating film may be excessively increased, thereby reducing the adhesion.

The dispersion composition may include the isocyanate compound such that a mole of isocyanate groups in the isocyanate compound is in a range from 1.0 to 1.5 mole (NCO/OH mole ratio) relatively to a total mole of hydroxyl groups in the polycarbonate polyol and the alkylene phosphate polyol. Specifically, the dispersion composition may include the isocyanate compound such that a mole of isocyanate groups in the isocyanate compound is in a range from 1.1 to 1.4 mole (NCO/OH mole ratio) relatively to a total mole of hydroxyl groups in the polycarbonate polyol and the alkylene phosphate polyol. When the NCO/OH mole ratio is within the above range, the formed coating film exhibits the excellent appearance and the excellent hardness. In contrast, when the NCO/OH mole ratio is less than the above range, the prepared polyurethane exhibits higher viscosity to deteriorate the appearance characteristics of a prepared coating film. When the NCO/OH mole ratio exceeds the above range, the prepared coating film may exhibit the lower hardness and the insufficient adhesion.

The dispersion composition may further include at least one additive selected from the group consisting of a solvent, a neutralizing agent, and a chain extender.

### Additive

In this case, each of the solvent, the neutralizing agent, and the chain extender serving as the additive may be used without a particular limitation, as long as each of the solvent, the neutralizing agent, and the chain extender is generally used when polyurethane is prepared.

The content of the additive may be appropriately adjusted based on various physical properties such as the flowability and the viscosity of the composition.

### Base coat composition for vehicle refinishing

In addition, according to the present disclosure, the base coat composition for the vehicle refinishing includes a water-soluble polyurethane dispersion prepared from the water-soluble polyurethane dispersion composition, an acrylic resin, and a solvent.

### Water-soluble polyurethane dispersion

The water-soluble polyurethane dispersion serving as a main resin of a coating material, is to form a coating film, to impart elongation and elasticity to the formed coating film, and to impart a rheological property.

In addition, the water-soluble polyurethane dispersion is prepared by using the above-described composition. In addition, a method for preparing the water-soluble polyurethane dispersion is not particularly limited, as long as a temperature and pressure are applicable to prepare a polyurethane dispersion. For example, the method may be performed at the temperature ranging from 60°C to 100°C, or ranging from 70°C to 90°C.

The water-soluble polyurethane dispersion may be a water-dispersible polyurethane resin.

In addition, the water-soluble polyurethane dispersion may have a viscosity ranging from 10 cp to 500 cp, or ranging from 15 cp to 100 cp at the temperature of 25°C. When the viscosity of the polyurethane dispersion is within the range at 25°C, the paint including the polyurethane dispersion may exhibit excellent workability. In addition, when the viscosity of the polyurethane dispersion is less than the range at 25°C, the viscosity of the polyurethane resin is excessively lowered to exhibit the insufficient workability of the paint composition including the polyurethane dispersion. When the viscosity of the polyurethane dispersion exceeds the range at 25°C, the viscosity of the polyurethane resin is excessively increased to degrade the stability, and the dispersion stability is degraded, such that the polyurethane dispersion is aggregated over time.

The water-soluble polyurethane dispersion may have the acid value (Av) ranging from 10 mgKOH/g to 40 mgKOH/g, or from 20 mgKOH/g to 35 mgKOH/g. When the acid value of the water-soluble polyurethane dispersion is within the range, the dispersibility in water and storage stability of a coat composition including the water-soluble polyurethane dispersion are improved to improve the water resistance of the coating film. In addition, when the acid value of the water-soluble polyurethane dispersion is less than the above range, hydrophobicity of the polyurethane dispersion is increased, thereby reducing dispersion stability in water. When the acid value exceeds the above range, hydrophilicity of the polyurethane dispersion is increased, thereby increasing a hydrophilic component to deteriorate the water resistance of the prepared coating film.

Furthermore, the water-soluble polyurethane dispersion may have an amine value ranging from 10 mmol/g to 40 mmol/g, or ranging from 20 mmol/g and 30 mmol/g. When the amine value of the water-soluble polyurethane dispersion is within the range, the water resistance, the adhesion, and the appearance characteristics of the prepared coating film are improved. In addition, when the amine value of the water-soluble polyurethane dispersion is less than the range, the storage stability of the polyurethane dispersion is deteriorated, such that the paint composition including the water-soluble polyurethane dispersion does not form the coating film sufficiently. When the amine value of the water-soluble polyurethane dispersion exceeds the range, the viscosity of the polyurethane dispersion may be increased to be prevented from being applied to the paint.

The water-soluble polyurethane dispersion may have an average diameter of dispersed particles ranging from 50 nm to 100 nm, or from 60 nm to 80 nm. When the average diameter of the dispersed particles of the polyurethane dispersion is within the above range, dispersion stability of polyurethane particles is improved, thereby improving appearance of a prepared coating film. Furthermore, when the average diameter of the polyurethane dispersed particles is less than the above range, the viscosity of the dispersion is excessively increased, such that the polyurethane dispersion fails to be applied to the paint. When the average diameter of the polyurethane exceeds the above range, the viscosity of the dispersion is excessively decreased, such that a problem is caused in workability of the paint including the same. In this case, the average diameter of the dispersed particles may be measured through a particle size analyzer (PSA) or laser light scattering (LLS) by diluting the dispersion particles at a concentration of 0.1 wt% in deionized water (DIW).

Furthermore, the water-soluble polyurethane dispersion may be diluted in a solvent, stored in a separate container, and sufficiently stirred immediately before use. In this case, the solvent is not particularly limited as long as the solvent is generally used in a paint composition.

The water-soluble polyurethane dispersion may have a pH ranging from 5 to 9, or from 6 to 8. In this case, the pH of the water-soluble polyurethane dispersion may be adjusted by using the neutralizing agent as described above.

In addition, the water-soluble polyurethane dispersion may be included in the base coat composition in an amount ranging from 10 parts by weight to 50 parts by weight, from 15 parts by weight to 45 parts by weight, or from 25 parts by weight to 35 parts by weight, based on 100 parts by weight of the base coat composition. When the content of the polyurethane dispersion is within the above range, the water resistance of the formed coating film is improved and the stability after dispersion in water of a paint composition is improved. In addition, when the amount of the polyurethane dispersion is less than the range, the water resistance of the formed coating film and the dispersion stability in water of the paint composition are lowered. When the amount of the polyurethane dispersion exceeds the range, the hardness of the formed coating film may be degraded.

### Acrylic resin

The acrylic resin serving as the main resin of the paint forms the coating film and improves the appearance characteristic such as the gloss of the formed coating film, and the adhesion and water resistance of the coating film.

The acrylic resin may be in a form of a water-dispersed acrylic emulsion.

Furthermore, the acrylic resin may have a glass transition temperature (Tg) ranging from 10°C to 70°C, or ranging from 15°C to 60°C. When the glass transition temperature of the acrylic resin is within the above range, the property of the base coat composition including the acrylic resin to form the coating film is improved, and the adhesion of the base coat composition and the glass characteristic of the coating film are improved. Meanwhile, when the glass transition temperature of the acrylic resin is less than the above range, the formed coating film becomes excessively soft, thereby causing insufficient hardness of the coating film and slow drying of the composition. When the glass transition temperature exceeds the above range, a drying rate of the coat composition including the acrylic resin is increased, thereby causing insufficient appearance characteristics of a prepared coating film.

The acrylic resin may have the acid value (Av) ranging from 15 to 35 mgKOH/g, or from 20 mgKOH/g to 30 mgKOH/g. When the acid value of the acrylic resin is within the range, the dispersibility in water and storage stability of the base coat composition including the acrylic resin are improved to improve the water resistance of the coating film. In addition, when the acid value of the acrylic resin is less than the above range, hydrophobicity of the acrylic resin is increased, thereby reducing dispersion stability in water. When the acid value exceeds the above range, hydrophilicity of the acrylic resin is increased, thereby increasing a hydrophilic component to deteriorate the water resistance of the prepared coating film.

Furthermore, the acrylic resin may have an amine value ranging from 5 mgKOH/g to 25 mgKOH/g, or ranging from 7 mgKOH/g to 15 mgKOH/g. When the amine value of the acrylic resin is within the range, the water resistance and the adhesion of the formed coating film and the appearance of the coating film are improved. In addition, when the amine value of the acrylic resin is less than the range, the storage stability of the acrylic resin is deteriorated such that the property of the coat composition to form the coating film becomes insufficient. When the amine value of the acrylic resin exceeds the range, the viscosity of the acrylic resin is increased such that the acrylic resin fails to be applied to the paint.

The acrylic resin has a viscosity ranging from 10 to 500 CP or from 10 to 300 CP at 25°C. When the viscosity of the acrylic resin is within the range at 25°C, the storage stability of the acrylic resin and the storage stability of the paint composition are improved to exhibit excellent workability. In addition, when the viscosity of the acrylic resin is less than the range at 25°C, the viscosity of the acrylic resin is excessively lowered to exhibit the insufficient workability of the paint composition including the acrylic resin. When the viscosity of the acrylic resin exceeds the range at 25°C, the viscosity of the acrylic resin is excessively increased to degrade the stability during the reaction, and the dispersion stability is degraded, such that the acrylic resin is aggregated over time.

Furthermore, the acrylic resin may have an average particle diameter of dispersed particles ranging from 50 nm to 300 nm, or ranging from 100 nm to 200 nm. When the average particle diameter of dispersed particles of the water-soluble acrylic resin is within the above range, dispersion stability may be excellent when the acrylic resin is applied to a resin and/or a paint. Meanwhile, when the average particle diameter of the dispersed particles of the water-soluble acrylic resin is less the range, the viscosity of the acrylic resin is increased such that the workability of the paint is insufficient. When the average particle diameter of the dispersed particles exceeds the range, the dispersed particles of the acrylic resin is excessively increased to cause a problem in the appearance of the formed coating film. In this case, the average particle diameter of the dispersed particles may be a value measured through laser light scattering (LLS) or a particle size analyzer (PSA) by diluting a sample at a concentration of 0.1 wt% in water.

In addition, the acrylic resin may be included in the base coat composition in an amount ranging from 10 parts by weight to 50 parts by weight, from 15 parts by weight to 45 parts by weight, or from 25 parts by weight to 35 parts by weight, based on 100 parts by weight of the base coat composition. When the content of the acrylic resin is within the range, the appearance, the adhesion, and the water resistance of the prepared coating film are improved. Meanwhile, when the content of the acrylic resin is less than the range, the adhesion, the water resistance, and the appearance of the formed coating film may be degraded. When the content of the acrylic resin exceeds the range, the storage stability of the paint including the acrylic resin may be degraded.

### Solvent

The solvent serves to improve applicability by adjusting the viscosity of the paint composition to improve the workability and serves as an antifreezing agent.

The solvent may include at least one type selected from the group consisting of an organic solvent and water. For example, the solvent may include the mixture of water and the organic solvent. However, the solvent may be appropriately selected depending on the characteristic of the resin in the paint or the volatile speed of the paint.

The water may include deionized water, purified water, ultrapure water, or distilled water, and reduce generation of volatile organic compounds (VOC) of the composition.

The organic solvent is not particularly limited as long as the organic solvent is miscible with water. For example, the organic solvent may include butyl cellosolve, n-butanol, isopropanol, propylene glycol, n-propyl ether, propylene glycol n-butyl ether, dipropylene glycol methyl ether, dipropylene glycol n-butyl ether, propanediol diacetate, ethylene glycol, and the mixture thereof.

The solvent may be included in the base coat composition in an amount ranging from 10 parts by weight to 50 parts by weight, or from 25 parts by weight to 40 parts by weight, based on 100 parts by weight of the base coat composition. Specifically, the base coat composition may include water, which is an amount ranging from 10 parts by weight from 40 parts by weight or ranging from 15 parts by weight to 35 parts by weight, and an organic solvent which is in an amount ranging from 1 part by weight to 20 parts by weight or ranging from 4 parts by weight to 15 parts by weight, but the present disclosure is not limited thereto. For example, the contents of the water and the organic solvent may be appropriately adjusted, based on the viscosity and/or the fluidity of the paint.

The base coat composition may further include a coating additive applicable to the base coating composition. The paint additive may include, for example, an antifoaming agent, a leveling agent, a dispersing agent, an ultraviolet absorber, a thickening agent, a weather resistance additive, an antifreezing agent, or a pigment. In this case, each component of the coating additive is not particularly limited as long as the component is applicable to the coating composition.

As described above, according to the base coat composition of the present disclosure, the formed coating film is excellent in appearance characteristic, such as gloss, adhesion, water resistance, and weather resistance. In particular, the base coat composition is significantly excellent in adhesion such that the base coat composition is significantly appropriate as a base coat for vehicle refinishing.

### [MODE FOR CARRYING OUT THE INVENTION]

Hereinafter, the present disclosure will be described in more detail through examples. However, these embodiments are provided only for the illustrative purpose, and the scope of the present disclosure is not limited to the embodiments even in any meaning.

### [Example]

### Preparation example 1. Preparation of water-soluble polyurethane dispersion-1

Components were mixed with compositions shown in Table 1 to prepare a water-soluble polyurethane dispersion.

Specifically, acetone for a solvent, 3-hydroxy-2-(hydroxymethyl)-2-methylpropanoic acid (DMPA) for an acid compound, triethylamine (TEA) for a neutralizing agent, poly(hexamethylene carbonate) diol (PCD) for a polycarbonate polyol, and poly(ethylene oxide), α-hydroxy, or ω-phosphonic acid for an alkylene phosphate polyol were introduced into a reactor, and the temperature was increased to 100°C.

The polycarbonate polyol may have a weight average molecular weight (Mw) of 2,000 g/mol and a hydroxyl value (OHv) of 56 mgKOH/g, and the alkylene phosphate polyol may have a weight average molecular weight (Mw) of 600 g/mol and a hydroxyl value (OHv) of 94 mgKOH/g.

Thereafter, after confirming that the DMPA was dissolved, the mixture was cooled to 40°C, and isophorone diisocyanate (IPDI) and hexamethylene diisocyanate (HMDI) for an isocyanate compound were dropwise added at 40°C for 30 minutes. Next, after leaving the result at 50°C for 5 hours, NCO% was measured by correction based on an amine value. When the NCO% reached a value in range from 2.8 wt% to 3.1 wt%, deionized water (DIW) was dropwise added at 30°C for 10 minutes, and then an ethylenediamine (EDA) aqueous solution (ethylene diamine concentration: 6.25 wt%) for a chain extender was dropwise added for 5 minutes. Subsequently, after standing at 40°C for 2 hours, the temperature was increased to 80°C to recover acetone. After recovering acetone, the mixture was cooled to a room temperature to prepare water-soluble polyurethane dispersion-1.

The prepared water-soluble polyurethane dispersion-1 had a solid content of 35.2 wt%, an average diameter of dispersed particles of 70 nm, a viscosity of 97 cps at 25°C, an acid value (Av) of 31.5 mgKOH/g, an amine value of 30 mmol/g, and a pH of about 7.

### Preparation examples 2 and 8. Preparation of water-soluble polyurethane dispersion

A water-soluble polyurethane dispersion was prepared by mixing respective components in a composition as described in Tables 1 and 2 below.

In this case, in Preparation Example 4, the resin was gelled during the reaction, so the resin could not be prepared.

**[Table 1]**

| Classification | [Weight part] | Preparation Example 1 | Preparation Example 2 | Preparation Example 3 | Preparation Example 4 | Preparation Example 5 |
|---|---|---|---|---|---|---|
| | | Polyurethane Dispersion -1 | Polyurethane Dispersion -2 | Polyurethane Dispersion -3 | Polyurethane Dispersion -4 | Polyurethane Dispersion -5 |
| Composition | Acetone | 10 | 10 | 10 | 10 | 10 |
| | DMPA | 0.2 | 2.3 | 0.2 | 0.2 | 0.2 |
| | TEA | 0.3 | 1.7 | 0.3 | 0.3 | 0.3 |
| | PCD(Mw 2,000 | 18.1 | 24.1 | 17.8 | - | - |
| | g/mol) | | | | | |
| | PCD(Mw 1,000 g/mol) | - | - | - | - | 16.9 |
| | Poly(ethylene oxide), α-hydoxy, ω-phosphonic acid | 10.9 | - | 10.7 | 29 | 10.2 |
| | IPDI | 3 | 4.5 | 6 | 3 | 4.2 |
| | HMDI | 2.3 | 3.4 | - | 2.3 | 3.2 |
| | DIW | 58 | 53.4 | 58.1 | 58 | 58.5 |
| | EDA | 7.1 | 10.6 | 7 | 7.1 | 6.7 |
| | Acetone (recovered amount) | -9.9 | -10 | -10.1 | -9.9 | -10.2 |
| | Total | 100 | 100 | 100 | 100 | 100 |
| Properties of the prepared polyurethane disper | Solid content (wt%) | 35.2 | 35.5 | 35.4 | - | 35.6 |
| | Viscosity (cps) at 25°C | 97 | 89 | 99 | - | 86 |
| | Acid value (mgKOH/g) | 31.5 | 27.6 | 30.1 | - | 30 |
| | Average diameter (nm) of dispersed | 70 | 65 | 73 | - | 79 |
| sion | particles | | | | | |
| | pH | 7.0 | 7.1 | 7.1 | - | 7.5 |

**[Table 2]**

| Classification | (parts by weight) | Preparation Example 6 | Preparation Example 7 | Preparation Example 8 |
|---|---|---|---|---|
| | | Polyurethane Dispersion-6 | Polyurethane Dispersion-7 | Polyurethane Dispersion-8 |
| Composition | Acetone | 10 | 10 | 10 |
| | DMPA | 2.3 | 0.2 | 0.2 |
| | TEA | 1.7 | 0.3 | 0.3 |
| | PCD(Mw 2,000 g/mol) | 20.3 | 18.5 | 18.3 |
| | Poly(ethylene oxide), α-hydoxy, ω-phosphonic acid | - | 11.1 | 11 |
| | 1,6-Hexane diol | 1.2 | - | - |
| | IPDI | 5.9 | - | 1.4 |
| | HMDI | 4.4 | 4.7 | 3.6 |
| | DIW | 50.4 | 57.9 | 57.9 |
| | EDA | 13.7 | 7.3 | 7.2 |
| | Acetone (recovered amount) | -10 | -10 | -10 |
| | Total | 99.9 | 100 | 99.9 |
| Physic | Solid content (wt%) | 35.2 | 35.1 | 35.2 |
| al property of prepared polyurethane dispersion | Viscosity (cps) at 25°C | 97 | 88 | 95 |
| | Acid value (mgKOH/g) | 27.1 | 32.2 | 31.9 |
| | Average diameter (nm) of dispersed particles | 70 | 80 | 75 |
| | pH | 7.0 | 7.1 | 7.1 |

### Experimental examples 1 and 13. Preparation of base coat composition

Components were mixed with compositions shown in Table 3 and 4 to prepare a base coat composition.

**[Table 3]**

| (Parts by weight) | Experimental Example 1 | ExperimentalExample 2 | Experimental Example 3 | Experimental Example 4 | Experimental Example 5 | Experimental Example 6 | Experimental Example 7 |
|---|---|---|---|---|---|---|---|
| Preparation Example 1 | 31 | | | | | | |
| Preparation Example 2 | | 31 | | | | | |
| Preparation Example 3 | | | 31 | | | | |
| Preparation Example 5 | | | | 31 | | | |
| Preparation Example 6 | | | | | 31 | | |
| Preparation Example 7 | | | | | | 31 | |
| Preparation Example 8 | | | | | | | 31 |
| Acrylic emulsion | 30 | 30 | 30 | 30 | 30 | 30 | 30 |
| Deionized water | 26 | 26 | 26 | 26 | 26 | 26 | 26 |
| Organic solvent | 8 | 8 | 8 | 8 | 8 | 8 | 8 |
| Antifoaming agent | 0.5 | 0.5 | 0.5 | 0.5 | 0.5 | 0.5 | 0.5 |
| Thickening agent | 0.5 | 0.5 | 0.5 | 0.5 | 0.5 | 0.5 | 0.5 |
| Weather resistance additive | 1 | 1 | 1 | 1 | 1 | 1 | 1 |
| Antifreezing agent | 1.5 | 1.5 | 1.5 | 1.5 | 1.5 | 1.5 | 1.5 |
| Leveling agent | 0.5 | 0.5 | 0.5 | 0.5 | 0.5 | 0.5 | 0.5 |
| Metallic pigment | 1 | 1 | 1 | 1 | 1 | 1 | 1 |
| Total weight | 100 | 100 | 100 | 100 | 100 | 100 | 100 |

**[Table 4]**

| (Parts by weight) | Experimental Example 8 | Experimental Example 9 | Experimental Example 10 | Experimental Example 11 | Experimental Example 12 | Experimental Example 13 |
|---|---|---|---|---|---|---|
| Preparation Example 1 (Polyurethane Dispersion-1) | 15 | 45 | 25 | 35 | 31 | 31 |
| Acrylic emulsion | 30 | 30 | 30 | 30 | 25 | 35 |
| Deionized water | 38 | 15.2 | 30.4 | 22.8 | 29.6 | 22 |
| Organic solvent | 12 | 4.8 | 9.6 | 7.2 | 9.4 | 7 |
| Antifoaming agent | 0.5 | 0.5 | 0.5 | 0.5 | 0.5 | 0.5 |
| Thickening | 0.5 | 0.5 | 0.5 | 0.5 | 0.5 | 0.5 |
| agent | | | | | | |
| Weather resistance additive | 1 | 1 | 1 | 1 | 1 | 1 |
| Antifreezing agent | 1.5 | 1.5 | 1.5 | 1.5 | 1.5 | 1.5 |
| Leveling agent | 0.5 | 0.5 | 0.5 | 0.5 | 0.5 | 0.5 |
| Metallic pigment | 1 | 1 | 1 | 1 | 1 | 1 |
| Total amount | 100 | 100 | 100 | 100 | 100 | 100 |

Hereinafter, the manufacturers and product names of the respective components used in the Experimental Examples are shown in following Table 5.

**[Table 5]**

| | Chemical name or physical property | Manufacturer and product name |
|---|---|---|
| Acrylic emulsion | Solid content: 24 wt%, Viscosity at 25°C: 100 cP, Acid value: 20 mgKOH/g, and Amine value: 15 mmol/g. | - |
| Organic solvent | n-butanol | - |
| Antifoaming agent | - | Manufacturer: Münzing; Product name: Agitan 281 |
| Thickening agent | - | Manufacturer: Rohm & Haas; Product name: RM-8W |
| Weather resistance additive | Hydroxybenzophenone | - |
| Antifreezing agent | Propylene glycol | - |
| Leveling agent | - | Manufacturer: Air Products; Product name: Surfynol 104 |
| Metallic pigment | - | Manufacturer: ECKART GmbH; Product name: BG HYDRONLAN 8154 |

### Test Example: Property Evaluation

A base coat composition according to each of the Experimental Examples was applied onto a substrate using a spray gun to a dry film thickness of 21±1 µm, and then cured at 60°C for 4 hours to prepare a specimen coating film. Thereafter, physical properties of the base coat composition and the specimen coating film were measured through the following manners, and the results are shown in Tables 6 and 7.

### (1) Appearance-1 (CF)

Gloss (LU) of the specimen coating film, and the sharpness of image (SH), and the smoothness (OP) of the specimen coating film were measured using Wave Scan DOI (BYK Gardner), which is an automotive appearance measuring instrument, and a comprehensive appearance evaluation value (CF) was calculated using the measured physical properties according to Equation 1. In this case, as the CF value is increased, the appearance of the coating film was evaluated as being more excellent. $CF = LUX 0.15 + SHX 0.35 + OPX 0.5$

### (2) Appearance-2 (FI)

The appearance characteristic of the specimen coating film was measured using an MA-98 instrument (X-Rite).

### (3) Appearance-3 (OP)

The smoothness (OP) of the specimen coating film was measured using Wave Scan DOI (BYK Gardner) serving as a device to measure an appearance of a vehicle.

### (4) Adhesion

According the tape adhesion test method of ASTM D3359, 100 squares each having a size of 2 mm × 2 mm (width × length) were formed on a surface of the specimen coating film using a cutter knife. The squares were then peeled off four times using an adhesive tape, and the adhesion was evaluated based on the number of squares remaining.

### (5) Water resistance

Water resistance was evaluated in accordance with ASTM D714. After leaving the specimen coating film was left at 40 °C for 10 days, and the frequency and size of blisters were then examined.

Specifically, a blister size was rated on a scale of 0 to 10, wherein a rating of 10 indicates no blistering, a rating of 8 indicates the presence of small blisters visible to the naked eye, and ratings of 6, 4, and 2 indicate the presence of progressively larger blisters.

In addition, a blister frequency was evaluated as D (Dense) when blisters occurred frequently, MD (Medium dense) when blisters occurred relatively less frequently, M (Medium) when blister occurrence was moderate, and F (Few) when blister occurrence was low.

### (6) Color difference after storage

The base coat composition was allowed to leave (store) at 50°C for 10 days and then applied as described above to prepare a specimen coating film. Thereafter, L*, a*, and b* values at 45° of a specimen coating film prepared from a composition before storage and a specimen coating film prepared from a composition after storage were measured using a colorimeter, and a ΔE value was calculated.

### (7) Drying property

Air blowing was performed with respect to the specimen coating film at the distance of 70 cm and a tack-free drying time was measured to evaluate the drying property.

The time taken in the tack-free drying was measured at 25°C through a manner in compliance with ASTM D1640. In this time, a time taken for hard-curing was measured a time in which the coating film was not stained when the coating film was strongly pressed by a hand and twisted left and right.

**[Table 6]**

| | Experimental Example 1 | Experimental Example 2 | Experimental Example 3 | Experimental Example 4 | Experimental Example 5 | Experimental Example 6 |
|---|---|---|---|---|---|---|
| Appearance (CF) | 75 | 72 | 73 | 73 | 72 | 72 |
| Appearance (FI) | 4 | 2.5 | 3.5 | 3.5 | 2.5 | 2.5 |
| Appearanc | 85 | 84.2 | 71.5 | 84 | 84.2 | 84.2 |
| e (OP) | | | | | | |
| Drying property | 2 min 18 s | 7 min 2 s | 2 min 50 s | 2 min 30 s | 7 min 2 s | 6 min 45 s |
| Adhesion | 100/100 | 50/100 | 70/100 | 100/100 | 50/100 | 100/100 |
| Water resistance | No blister | No blister | Blister size 2(Medium) | No blister | No blister | No blister |
| Color difference after storage (ΔE*) | 0.51 | 1.02 | 0.89 | 0.55 | 1.2 | 0.61 |

**[Table 7]**

| | Experimental Example 7 | Experimental Example 8 | Experimental Example 9 | Experimental Example 10 | Experimental Example 11 | Experimental Example 12 | Experimental Example 13 |
|---|---|---|---|---|---|---|---|
| Appearance (CF) | 73 | 74 | 74.5 | 74.5 | 74 | 74 | 74.5 |
| Appearance (FI) | 3.5 | 3.9 | 3.7 | 3.8 | 3.8 | 3.7 | 3.9 |
| Appearance (OP) | 71.5 | 83.5 | 82.7 | 84.6 | 82.6 | 83.8 | 84.1 |
| Drying | 5 min 10 | 2 min 30 s | 2 min 20 | 2 min 25 | 2 min 27 | 2 min 28 | 2 min 25 |
| property | s | | s | s | s | s | s |
| Adhesion | 80/100 | 100/100 | 100/100 | 100/100 | 100/100 | 100/100 | 100/100 |
| Water resistance | Blister size 6(Medium) | No blister | No blister | No blister | No blister | No blister | No blister |
| Color difference after storage | 0.75 | 0.54 | 0.53 | 0.55 | 0.54 | 0.53 | 0.55 |

Referring to Tables 6 and 7, Experimental Examples 1, 4, 8 to 13 were excellent in all physical properties.

In contrast, in Experimental Example 2, in which an alkylene phosphate polyol was not included in synthesis of a polyurethane dispersion, inferior adhesion and the inferior drying property were exhibited, and in Experimental Example 3, in which the isocyanate having the linear structure was not included, inferior water resistance and inferior adhesion were exhibited.

In addition, in Experimental Example 5 including hexanediol instead of an alkylene phosphate polyol in synthesis of the polyurethane dispersion, the inferior adhesion and the inferior drying property were exhibited. In Experimental Example 6 not including an isocyanate having the alicyclic structure, the inferior drying property was exhibited. In Experimental Example 7 making the difference in the weight ratio between the isocyanate having the alicyclic structure and the isocyanate having the linear structure, the inferior drying property, the inferior adhesion, and the inferior water resistance were exhibited.

## Claims

1. A water-soluble polyurethane dispersion composition comprising:
a polycarbonate polyol;
an alkylene phosphate polyol; and
an isocyanate compound,
wherein the alkylene phosphate polyol includes an acid group and a hydroxyl group.

2. The water-soluble polyurethane dispersion composition of claim 1, wherein the alkylene phosphate polyol includes a compound represented by following Chemical Formula 1, 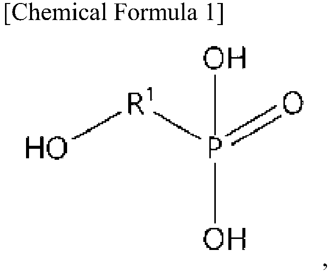 wherein, in Chemical Formula 1, R¹ is a group containing oxyalkylene or alkylene.

3. The water-soluble polyurethane dispersion composition of claim 1, wherein the isocyanate compound includes:
a first isocyanate compound having an alicyclic structure; and
a second isocyanate compound having a linear structure.

4. A base coat composition for vehicle refinishing comprising:
a water-soluble polyurethane dispersion which is prepared from the water-soluble polyurethane dispersion composition according to any one of claims 1 to 3;
an acrylic resin; and
a solvent.

5. The base coat composition of claim 4, wherein the water-soluble polyurethane dispersion has a viscosity ranging from 10 cp to 500 cp at 25°C, an acid value ranging from 10 mgKOH/g to 40 mgKOH/g, an amine value ranging from 10 mmol/g to 40 mmol/g, and an average diameter of each dispersion particle which is in a range from 50 nm to 100 nm.

6. The base coat composition of claim 4, wherein the water-soluble polyurethane dispersion is in a range from 10 parts by weight to 50 parts by weight; and the acrylic resin is in a range from 10 parts by weight to 50 parts by weight.
